# EUROPÄISCHE PATENTSCHRIFT

(11) **EP 3 014 127 B1**
(45) Veröffentlichungstag und Bekanntmachung des Hinweises auf die Patenterteilung: **22.12.2021**
(21) Anmeldenummer: 13737796.6
(22) Anmeldetag: 28.06.2013
(51) Int. Cl.: A01K 79/00, F04D 3/00, F04D 29/18, F04D 29/54

(54) **PUMPENVORRICHTUNG**
PUMP DEVICE
DISPOSITIF DE POMPAGE

(43) Veröffentlichungstag der Anmeldung: 04.05.2016
(73) Patentinhaber: Frideco AG, 8213 Neunkirch (CH)
(72) Erfinder: STÄHLE, Carl, CH-8213 Neunkirch (CH)
(74) Vertreter: Daub, Thomas
(86) Internationale Anmeldenummer: PCT/EP2013/001904
(87) Internationale Veröffentlichungsnummer: WO 2014/206431

(56) Entgegenhaltungen:
- EP-A1- 1 624 195
- CH-A5- 626 953
- GB-A- 2 012 361
- US-A- 1 971 386
- US-A- 2 202 790
- US-A- 3 075 743
- US-A- 3 261 297
- US-A- 3 398 694
- US-A- 4 072 612
- US-A- 4 193 737
- US-A- 5 681 146

## Beschreibung

### Stand der Technik

Die Erfindung betrifft eine Axialpumpenvorrichtung nach dem Oberbegriff des Anspruchs 1.

Es sind bereits Pumpenvorrichtungen vorgeschlagen worden, die als Schrauben oder Statorträgerelemente ausgebildete Strömungseingriffselemente aufweisen, die Anlaufflächen aufweisen, die dazu vorgesehen sind, eine zu transportierende Materialmenge aufzuteilen, hierbei sind die Anlaufflächen jeweils als Kanten ausgebildet, um einen geringstmöglichen Widerstand darzustellen.

Beispielsweise ist aus der Druckschrift US 3 075 743 A eine Pumpenvorrichtung mit einem Laufrad und einem Statorhalteelement bekannt, wobei zu einer effektiven Lautstärkenreduzierung und gesteigerten Leistungsfähigkeit der Pumpenvorrichtung eine spezielle Ausgestaltung von Flügelpaaren an dem Laufrad und dem Statorhalteelement vorgesehen sind.

Des Weiteren schlägt die Druckschrift US 3 398 694 A eine Diagonal- bzw. Radialpumpe mit Radialleitschaufeln vor.

Die Aufgabe der Erfindung besteht insbesondere darin, eine gattungsgemäße Vorrichtung mit verbesserten Eigenschaften hinsichtlich einer Schädigung der zu transportierenden Materialmenge bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Pumpenvorrichtung, welche als eine Axialpumpenvorrichtung ausgebildet ist, mit einem Laufrad und mit zumindest einem Strömungseingriffselement, das zumindest eine Anlauffläche aufweist, die dazu vorgesehen ist, ein zu transportierendes Medium, insbesondere in Teilströme, aufzuteilen.

Es wird vorgeschlagen, dass die Anlauffläche zumindest bezüglich einer Spaltrichtung eine konvexe Wölbung aufweist. Unter einem "Strömungseingriffselement" soll insbesondere ein Element verstanden werden, das zumindest zwei, vorzugsweise zumindest im Wesentlichen gegenüberliegende Außenseiten aufweist, an denen in zumindest einem Betriebszustand zu transportierendes Medium entlang geführt wird. Unter einer "Anlauffläche" soll insbesondere eine Fläche verstanden werden, an der das zu transportierende Medium in Teilmengen, die insbesondere an unterschiedlichen Seiten des Strömungseingriffselements geführt werden, aufgeteilt wird. Insbesondere entspricht die Anlauffläche einer Oberfläche des Strömungseingriffselements, die bezüglich einer Relativbewegung des zu transportierenden Mediums zum Strömungseingriffselement des zu transportierenden Mediums entgegen gerichtet ist. Unter einer "Spaltrichtung" soll insbesondere eine Richtung verstanden werden, die zumindest in einem Betriebszustand einer Richtung einer Relativbewegung des zu transportierenden Mediums zu der Anlauffläche entspricht. Unter einer Pumpenvorrichtung soll insbesondere eine Vorrichtung verstanden werden, die dazu vorgesehen ist, Material über eine bestimmte Wegstrecke zu transportieren, wobei diese Wegstrecke insbesondere von einem ersten Punkt zu einem höher gelegenen zweiten Punkt führt. Insbesondere weist die Pumpenvorrichtung zumindest ein Laufrad auf, das dazu vorgesehen ist, durch Rotationsbewegung das zu befördernde Medium in Bewegung zu versetzen. Unter "vorgesehen" soll insbesondere speziell ausgeformt, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Darunter, dass die Anlauffläche eine "Wölbung" aufweist, soll insbesondere verstanden werden, dass zumindest 70 %, insbesondere zumindest 90 %, der Anlauffläche, insbesondere zumindest quer bezüglich einem Verlauf der Anlauffläche, zumindest einen Krümmungsradius aufweisen, der größer ist als 3 mm, insbesondere größer ist als 5 mm, vorteilhaft größer ist als 10 mm, besonders vorteilhaft größer ist als 20 mm. Insbesondere ist ein Krümmungsradius der Wölbung größer als 2 %, insbesondere größer als 3 %, vorteilhaft größer als 5 %, eines Durchmessers einer Eintrittsöffnung der Pumpenvorrichtung. Unter einem "Verlauf" der Anlauffläche soll insbesondere eine Linie verstanden werden, die von Punkten der Anlauffläche gebildet ist, deren Flächennormale zumindest im Wesentlichen parallel zumindest zu einer an dem Punkt und/oder einem Nahbereich des Punktes vorliegenden Relativbewegung des Strömungseingriffselements zu dem zu transportierenden Medium liegt. Insbesondere ist die Eintrittsöffnung von einem Hüllelement, das insbesondere das Laufrad und/oder ein anderes Transportelement umhüllt, gebildet.

Durch die erfindungsgemäße Ausgestaltung kann insbesondere eine geringe Schädigung des zu transportierenden Mediums erreicht werden. Insbesondere kann mit Fischen, insbesondere Aalen oder auch anderen Lebewesen, versetztes Wasser, insbesondere zur Überwindung von Staustufen, transportiert werden, wobei die Fische den Transport vorzugsweise lebendig, insbesondere zumindest im Wesentlichen unbeschadet überstehen. Insbesondere kann erreicht werden, dass, insbesondere in Flüssigkeit geführte, weiche und harte Objekte, insbesondere Objekte mit Hülle und/oder weichem Kern, insbesondere Früchte und/oder Gemüse, beispielsweise Tomaten oder Orangen, zumindest weitgehend unbeschadet gefördert werden können.

Weiterhin wird vorgeschlagen, dass sich die Anlauffläche, insbesondere zumindest ein Verlauf der Anlauffläche, schräg bezüglich einer Haupttransportrichtung erstreckt. Unter einer "Haupttransportrichtung" soll insbesondere eine mittlere Transportrichtung verstanden werden, die sich insbesondere von einer Eintrittsöffnung zu einer Auftrittsöffnung erstreckt. Insbesondere liegt die Haupttransportrichtung zumindest im Wesentlichen parallel zu einer Rotationsachse des Laufrads. Insbesondere verläuft die Haupttransportrichtung entlang einer Kurve, die einer Mittelung aller in einem typischen Betrieb möglicher Bewegungskurven durch die Pumpenvorrichtung entspricht. Insbesondere weist zumindest ein Großteil, insbesondere zumindest 50 %, vorteilhaft zumindest 70 %, vorzugsweise zumindest 90 %, eines Verlaufs der Anlauffläche bezüglich zumindest einer Parallelen der Haupttransportrichtung einen Winkel auf, der zumindest 10°, insbesondere zumindest 15°, vorteilhaft zumindest 40°, vorzugsweise zumindest 50° entspricht. Insbesondere weist zumindest ein Großteil, insbesondere zumindest 50 %, vorteilhaft zumindest 70 %, vorzugsweise zumindest 90 %, eines Verlaufs der Anlauffläche bezüglich zumindest einer Parallelen der Haupttransportrichtung einen Winkel auf, der maximal 75°, insbesondere maximal 65°, vorteilhaft maximal 55°, vorzugsweise maximal 45° entspricht. Es kann insbesondere eine sanfte Führung und/oder eine geringe Beschädigung des zu transportierenden Mediums erreicht werden.

Ferner könnte die Axialpumpenvorrichtung ein weiteres Strömungseingriffselement aufweisen, welches als Laufrad ausgebildet ist. Vorteilhaft ist die Anlauffläche zumindest teilweise von einer vorauseilenden Fläche einer Laufradschaufel des Laufrads gebildet, die insbesondere einer Oberfläche des als Laufrad ausgebildeten weiteren Strömungseingriffselements entspricht, die bezüglich einer Relativbewegung des zu transportierenden Mediums zum Strömungseingriffselement des zu transportierenden Mediums entgegen gerichtet ist. Unter einem "Laufrad" soll insbesondere ein Element verstanden werden, das dazu vorgesehen ist, mittels Rotationsbewegung das zu transportierende Medium in Förderbewegung zu versetzen. Insbesondere liegt ein inneres Ende der Anlauffläche des Laufrads, insbesondere der Laufradschaufel, bezüglich einer Projektion auf eine Ebene senkrecht zur Rotationsachse außerhalb eines Zentrums des Laufrads, ist insbesondere mehr als 5 %, vorteilhaft mehr als 10 %, besonders vorteilhaft mehr als 20 %, vorzugsweise mehr als 30 %, eines Radius des Laufrads von der Rotationsachse entfernt. Insbesondere weist die Anlauffläche bezüglich einer Projektion auf eine Ebene senkrecht zur Rotationsachse zumindest nahe des Zentrums einen spiralartigen Verlauf auf, wobei ein Krümmungsradius größer ist als 2 mm, insbesondere größer ist als 4 mm, vorteilhaft größer ist als 10 mm, und/oder größer ist als 2 %, insbesondere größer ist als 4 %, eines Durchmessers des Laufrads. Es kann insbesondere eine sanfte Führung und/oder eine geringe Beschädigung des zu transportierenden Mediums erreicht werden.

Weiterhin wird vorgeschlagen, dass das Laufrad zumindest eine sichelförmige Laufradschaufel aufweist. Unter einer "sichelförmigen" Laufradschaufel soll insbesondere eine Laufradschaufel verstanden werden, deren Anlauffläche im Betrieb in äußeren Bereichen winkelmäßig inneren Bereichen der Anlauffläche vorrauseilt. Es kann insbesondere eine geringe Schädigung des zu transportierenden Mediums erreicht werden, da insbesondere Engstellen zwischen einem äußeren Ende der vorrauslaufenden Fläche und einer Wandung des Laufrads, insbesondere einem Laufradmantel und/oder einem Teil einer Statorhülle, vermieden werden.

Ferner wird vorgeschlagen, dass das Laufrad zumindest zwei Laufradschaufeln aufweist, deren gewölbte Anlaufflächen bildende vorauseilende Flächen ineinander übergehen. Insbesondere bildet ein Übergangsbereich der Anlaufflächen eine weitere Anlauffläche des Laufrads aus, entlang deren Verlauf zumindest ein Punkt eine Flächennormale aufweist, die zumindest im Wesentlichen parallel zur Rotationsachse liegt, vorzugsweise mit dieser identisch ist. Unter "im Wesentlichen parallel" soll insbesondere verstanden werden, dass ein Winkel von weniger als 10°, insbesondere weniger als 5°, vorteilhaft weniger als 2°, vorzugsweise weniger als 1°, eingeschlossen wird. Es kann insbesondere eine sanfte Führung und/oder eine geringe Beschädigung des zu transportierenden Mediums erreicht werden, da insbesondere Engstellen zwischen den Laufradschaufeln und/oder zwischen einer Nabe und den Laufradschaufeln vermieden werden können.

Das Strömungseingriffselement ist erfindungsgemäß als Statorhalteelement ausgebildet und dazu vorgesehen, einen das Laufrad tragenden Statorkern mit einer das zu transportierenden Medium innenseitig führenden Statorhülle tragend zu verbinden. Insbesondere ist der Statorkern zu einer Führung und/oder Halterung einer Antriebsachse des Laufrads vorgesehen. Insbesondere weist die Statorhülle einen Innendurchmesser auf, der zumindest im Wesentlichen einer Summe eines Außendurchmessers des Statorkerns und einem Durchmesser der Eintrittsöffnung entspricht. Insbesondere verjüngt sich das Strömungseingriffselement ausgehend von der Anlauffläche in Haupttransportrichtung, insbesondere von einem strömungszugewandten Ende des Strömungseingriffselement zu einem strömungsabgewandten Ende des Strömungseingriffselement. Insbesondere weist das Strömungseingriffselement ein verlängertes und/oder verzerrtes tropfenformartiges und/oder tragflächenartiges Profil auf. Insbesondere weist das Statorhalteelement bezüglich der Haupttransportrichtung eine Länge auf, die zumindest 50 % einer Breite des Statorelements entspricht. Eine Dicke des Statorelements ergibt sich entsprechend einem vorliegenden Krümmungsradius der Anlauffläche. Vorteilhaft ist das Statorhalteelement als Gussbauteil, alternativ als Schweißbauteil oder Kunststoffbauteil, ausgebildet. Insbesondere ist das Statorhalteelement mit der Statorhülle und/oder dem Statorkern verschweißt. Insbesondere weist das Statorhalteelement in Verbindungsbereichen mit und/oder in Übergangsbereichen zu der Statorhülle und/oder dem Statorkern quer zur Haupttransportrichtung einen Krümmungsradius auf, der größer ist als 1 cm, insbesondere größer ist als 2 cm. Vorzugsweise ist das Statorhalteelement als Leitschaufel ausgebildet und dazu vorgesehen, insbesondere durch das Laufrad, in Rotation versetztes Medium von einer schraubenförmigen Bahn auf eine zumindest im Wesentlichen lineare Bahn umzulenken. Es kann insbesondere eine sanfte Führung und/oder eine geringe Beschädigung des zu transportierenden Mediums erreicht werden.

Ferner wird vorgeschlagen, dass das als Statorhalteelement ausgebildete Strömungshilfselement zumindest einen Hohlraum, insbesondere einen Kanal, aufweist. Vorzugsweise ist der Hohlraum dazu vorgesehen, zumindest ein Kabel von einem außerhalb der Statorhülle angeordneten Raum zu einer in dem Statorkern angeordneten Antriebseinheit zu führen. Vorzugsweise ist die Antriebseinheit als Motor ausgebildet. Insbesondere ist die Antriebseinheit dazu vorgesehen, das Laufrad anzutreiben. Vorteilhaft ist der Hohlraum zumindest in einem Nahbereich der Anlauffläche ausgebildet. Insbesondere durchzieht der Hohlraum das Statorhalteelement, wobei insbesondere eine Wandstärke zu einem zwischen Statorhülle und Statorkern gebildeten Raum zumindest 3 mm, vorteilhaft zumindest 5 mm, vorzugsweise zumindest 1 cm, beträgt. Es kann insbesondere eine Materialersparnis erreicht werden. Insbesondere kann eine geringe Beschädigung des zu transportierenden Mediums erreicht werden, da insbesondere auf zusätzliche Antriebselemente, insbesondere Achsen, die insbesondere in dem zu transportierenden Medium geführt werden müssten, und zu weiteren Engstellen führen können, verzichtet werden kann.

Weiterhin wird vorgeschlagen, dass das als Statorhalteelement ausgebildete Strömungseingriffselement, insbesondere zumindest der Verlauf der Anlauffläche, zumindest teilweise, insbesondere zumindest in einer Projektion auf eine Ebene senkrecht zur Haupttransportrichtung, spiralförmig ausgebildet ist, wobei eine Windungsrichtung einer Richtung entspricht, in der sich von dem Laufrad gefördertes Medium bei nichtvorhandensein des Strömungseingriffselements um den Statorkern winden würde und/oder die einer Rotationsrichtung des Laufrads entspricht. Vorzugsweise erstreckt sich das Statorhalteelement entlang der Haupttransportrichtung zumindest abschnittsweise, insbesondere zumindest am strömungsmäßig auslaufenden Ende zumindest im Wesentlichen parallel zu der Haupttransportrichtung und/oder der Rotationsachse des Laufrads. Insbesondere ist das als Statorhalteelement ausgebildete Strömungseingriffselement zumindest teilweise wendelförmig ausgebildet, wobei eine Windungsrichtung einer Richtung entspricht, in der sich von dem Laufrad gefördertes Medium bei nichtvorhandensein des Strömungseingriffselements um den Statorkern winden würde und/oder die einer Rotationsrichtung des Laufrads entspricht. Vorzugsweise weist das Strömungseingriffselement bei zumindest teilweise wendelförmiger Ausgestaltung einen mit steigendem Abstand zum Laufrad größer werdenden Steigungswinkel auf. Es kann insbesondere ein verbesserter Strömungsübergang im Bereich zwischen den Strömungseingriffselementen erreicht werden. Es kann insbesondere eine sanfte Führung und/oder eine geringe Beschädigung des zu transportierenden Mediums erreicht werden, da dieses im Wesentlichen entlang der natürlichen Bewegungsrichtung geführt und weniger in eine bestimmte Bahn gezwungen wird. Insbesondere kann eine hohe Drehmomentfestigkeit, insbesondere bei einem Anfahren des Laufrads, erreicht werden.

Ferner wird vorgeschlagen, dass die Pumpenvorrichtung genau ein Statorhalteelement aufweist. Insbesondere weist dieses eine Anlauffläche auf, die an zumindest einer Stelle, vorteilhaft durchgängig, einen Krümmungsradius aufweist, der größer ist als 4 cm, insbesondere größer ist als 8 cm. Es kann insbesondere eine sanfte Führung und/oder eine geringe Beschädigung des zu transportierenden Mediums erreicht werden, da lediglich ein Element einer Strömung des zu transportierenden Mediums im Weg steht und/oder ein besonders großer Krümmungsradius einsetzbar ist. Um eine hohe Stabilität und/oder Drehmomentfestigkeit, insbesondere bei einem Anfahren des Laufrads, zu erreichen, wird vorgeschlagen, dass sich das Statorhalteelement über zumindest 90°, insbesondere zumindest 180°, vorteilhaft über zumindest 360° um den Statorkern windet. Alternativ ist es ebenso denkbar, dass die Pumpenvorrichtung zumindest zwei als Statorhalteelemente ausgebildete Strömungseingriffselemente aufweist. Insbesondere sind die Statorhalteelemente zumindest im Wesentlichen gleichförmig ausgebildet und/oder zumindest im Wesentlichen in gleichen Winkelabständen um den Rotorkern herum angeordnet. Insbesondere sind zumindest zwei der Statorhalteelemente bezüglich der Haupttransportrichtung in unterschiedlichem Abstand zu der Eintrittsöffnung angeordnet, um einen hohen Durchflussquerschnitt zu erreichen.

Weiterhin wird vorgeschlagen, dass die Wölbung der Anlauffläche zumindest über einen Großteil des Verlaufs der Anlauffläche in Richtung der Haupttransportrichtung einen größer werdenden Krümmungsradius aufweist. Insbesondere weist die Anlauffläche zumindest nahe einem äußeren Ende einen geringeren Krümmungsradius auf als nahe eines inneren Endes. Alternativ ist es denkbar, dass die Anlauffläche, insbesondere die Anlauffläche des als Statorhalteelement ausgebildeten Strömungseingriffselements zumindest nahe eines inneren Endes einen geringeren Krümmungsradius auf als nahe eines äußeren Endes. Insbesondere bilden zumindest in einer Projektion auf eine Ebene senkrecht zur Haupttransportrichtung Ränder der Anlauffläche einen Öffnungswinkel von zumindest 5°, insbesondere zumindest 10°, vorteilhaft zumindest 15°. Es kann insbesondere eine sanfte Führung und/oder eine geringe Beschädigung des zu transportierenden Mediums erreicht werden.

Ferner wird vorgeschlagen, dass zumindest ein Teil der Anlauffläche sattelförmig ausgebildet ist. Darunter, dass zumindest ein Teil der Anlauffläche sattelförmig ausgebildet ist, soll insbesondere verstanden werden, dass die Anlauffläche entlang einer ersten Richtung, insbesondere quer zum Verlauf der Anlauffläche, eine konvexe Wölbung aufweist und entlang einer zweiten Richtung, vorzugsweise entlang des Verlaufs, eine konkave Wölbung aufweist. Vorteilhaft weichen Beträge von maximalen Krümmungsradien der Wölbungen in unterschiedliche Richtungen maximal um 50 % voneinander ab. Vorteilhaft ist der sattelförmige Bereich von einem Teil der Anlauffläche gebildet, der bezüglich der Haupttransportrichtung am weitesten von einer Eintrittsöffnung entfernt ist. Insbesondere weist die Anlauffläche des als Laufrad ausgebildeten Strömungseingriffselements in einem Zentrum und/oder zumindest in einem Nahbereich des Zentrums des Laufrads eine sattelförmige Ausbildung auf. Vorteilhaft weist die Anlauffläche des als Statorhalteelement ausgebildeten Strömungseingriffselements in einem Befestigungsbereich des Statorhalteelements zu Statorkern und/oder Statorhülle eine sattelförmige Ausbildung auf. Es kann insbesondere eine sanfte Führung und/oder eine geringe Beschädigung des zu transportierenden Mediums erreicht werden, da insbesondere Bereiche mit kleinen Krümmungsradien vermieden werden können.

Erfindungsgemäß entspricht ein Abstand zwischen dem Laufrad und dem Statorhalteelement zumindest 25 %, insbesondere zumindest 40 %, vorteilhaft zumindest 60 %, vorzugsweise zumindest 100 %, eines Durchmessers des Laufrads. Es kann insbesondere eine sanfte Führung und/oder eine geringe Beschädigung und/oder Verletzung des zu transportierenden Mediums erreicht werden, da es dem zu transportierenden Medium insbesondere ermöglicht wird, einen unmittelbaren Wirkungsbereich des Laufrads zu verlassen, bevor dieses in einen Wirkungsbereich des Statorhalteelements gerät.

Ferner wird vorgeschlagen, dass das Laufrad zumindest eine Laufradschaufel aufweist, deren einer Haupttransportrichtung entgegen gerichtete Hauptfläche bezüglich der Haupttransportrichtung eine Neigung aufweist, die von außen nach innen größer wird. Es kann insbesondere eine sanfte Führung und/oder eine geringe Beschädigung des zu transportierenden Mediums erreicht werden, da insbesondere Engstellen zwischen der Laufradschaufel und einer Wandung des Laufrads vermieden werden können.

Vorteilhaft weist eine erfindungsgemäße Pumpenvorrichtung sowohl zumindest ein erfindungsgemäßes Laufrad auch zumindest ein, insbesondere zumindest zwei, erfindungsgemäßes als Statorhalteelement ausgebildetes Strömungseingriffselement auf. Alternativ ist es denkbar, dass eine erfindungsgemäße Pumpenvorrichtung ein herkömmliches Laufrad mit zumindest einem erfindungsgemäßen als Statorhalteelement ausgebildeten Strömungseingriffselement kombiniert, oder dass eine Pumpenvorrichtung herkömmliche Statorhalteelemente mit zumindest einem als Laufrad ausgebildeten Strömungseingriffselement kombiniert werden. Weiterhin ist es denkbar, dass ein erfindungsgemäßes Laufrad in einer Radialpumpenvorrichtung Einsatz findet. Weiterhin ist es denkbar, dass, insbesondere um bei gleicher Transportmenge eine kleinere Laufraddrehzahl zu erreichen, alternativ um höhere Pumphöhen und/oder größere Pumpgeschwindigkeiten zu erreichen, mehrere erfindungsgemäße Pumpenvorrichtungen in Reihe zu einer erfindungsgemäßen Pumpe kombiniert sind.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: zwei Ausführungsbeispiele von erfindungsgemäßen Axialpumpenvorrichtungen, in einer Nebeneinanderstellung in teilweiser geschnittener Ansicht,
- Fig. 2: einen schematischen Schnitt durch ein als Statorhalteelement ausgebildetes Strömungseingriffselement entlang der Linie II-II bzw. II'-II' in Figur 1,
- Fig. 2a: einen Schnitt entsprechend Figur 2 durch ein Statorhalteelement ohne Hohlraum,
- Fig. 3: eine Aufsicht auf ein als Laufrad ausgebildetes Strömungseingriffselement mit angedeuteten Höhenlinien,
- Fig. 3a: einen partiellen Schnitt entlang der Geraden III-III in Figur 3,
- Fig. 4: eine Seitenansicht des Laufrads nach Figur 3,
- Fig. 5: eine perspektivische Schnittdarstellung von zwei erfindungsgemäßen Statoreinheiten nach Figur 1,
- Fig. 6: eine Aufsicht entlang einer Haupttransportrichtung auf Statoreinheiten gemäß Figur 1,
- Fig. 7: eine alternative Ausgestaltung einer Statoreinheit in einer Ansicht entsprechend Figur 6,
- Fig. 8: eine alternative Ausgestaltung einer Statoreinheit in einer Ansicht entsprechend Figur 6,
- Fig. 9: eine alternative Ausgestaltung einer Statoreinheit in einer Ansicht entsprechend Figur 6,
- Fig. 10: eine alternative Ausgestaltung einer Statoreinheit in einer Ansicht entsprechend Figur 6,
- Fig. 11: eine alternative Ausgestaltung einer Statoreinheit in einer Ansicht entsprechend Figur 6,
- Fig. 12: eine alternative Ausgestaltung eines erfindungsgemäßen Laufrads in einer Aufsicht entlang der Rotationsachse,
- Fig. 13: die alternative Ausgestaltung des erfindungsgemäßen Laufrads aus Figur 12 in einer Seitenansicht,
- Fig. 14: eine alternative Ausgestaltung eines erfindungsgemäßen Laufrads in einer Aufsicht entlang der Rotationsachse,
- Fig. 15: die alternative Ausgestaltung des erfindungsgemäßen Laufrads aus Figur 14 in einer Seitenansicht,
- Fig. 16: eine alternative Ausgestaltung eines erfindungsgemäßen Laufrads in einer Aufsicht entlang der Rotationsachse und
- Fig. 17: die alternative Ausgestaltung des erfindungsgemäßen Laufrads in einer geschlossenen Variante aus Figur 16 in einer Seitenansicht,
- Fig. 17a: die alternative Ausgestaltung des erfindungsgemäßen Laufrads in einer offenen Variante aus Figur 16 in einer Seitenansicht,
- Fig. 18: alternative Ausgestaltung eines erfindungsgemäßen, als Statorhalteelement ausgebildeten Strömungseingriffselement in einer perspektivischen Seitendarstellung und
- Fig. 19: eine Ausgestaltung nach Fig. 18 in einer perspektivischen Aufsicht.

### Beschreibung der Ausführungsbeispiele

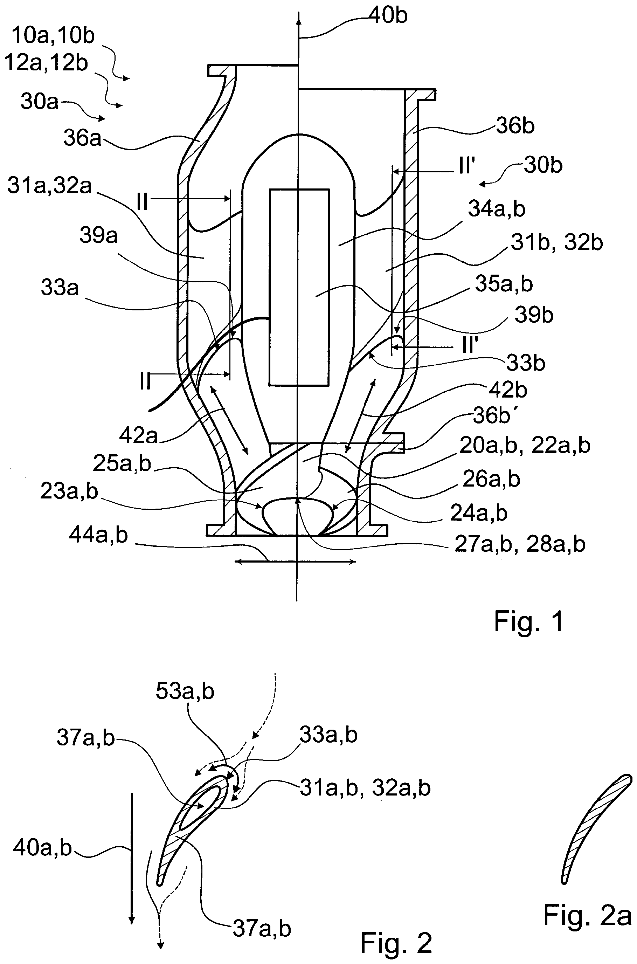

Figur 1 zeigt in einer linken Hälfte eine Pumpe 10a mit einer als Axialpumpenvorrichtung ausgebildeten Pumpenvorrichtung 12a. Die Pumpenvorrichtung 12a weist ein Laufrad 20a auf, das ein erstes Strömungseingriffselement 22a bildet. Weiterhin weist die Pumpenvorrichtung eine Statoreinheit 30a auf. Die Statoreinheit 30a weist einen Statorkern 34a, eine Statorhülle 36a und zwei den Statorkern mit der Statorhülle tragend verbindende als Statorhalteelemente 31a ausgebildete Strömungseingriffselemente 32a auf. Der Statorkern 34a lagert das Laufrad 20a und weist eine Antriebseinheit 35a zum Antrieb des Laufrads 20a auf. Die Statorhalteelemente 31a sind an sich gegenüberliegenden Stellen des Statorkerns 34a angeordnet. Die Statorhalteelemente 31a weisen eine im Wesentlichen gleiche äußere Form auf. Der Statorkern 34a ist strömungstechnisch hinter dem Laufrad 20a angeordnet. Die Statorhülle 36a bildet eine Wandung des Laufrads 20a. Zu transportierendes Medium, hier Wasser mit frei schwimmenden Fischen, wird durch eine Rotation des Laufrads 20a in Bewegung versetzt und innerhalb der Statorhülle 36a geführt. Das Laufrad 20a ist zylindrisch ausgebildet. Das Laufrad 20a ist offen ausgebildet, so dass Transportkanäle von Räumen zwischen dem Laufrad 20a und einem das Laufrad 20a einhüllenden statischen Element, hier der Statorhülle 36a, gebildet sind.

Alternativ ist es denkbar, dass das Laufrad von einem zu der Statorhülle separat zu montierenden Hüllelement umgeben ist und/oder der Statorkern strömungstechnisch vor dem Laufrad angeordnet ist. Ferner ist denkbar, dass das Laufrad konisch und/oder geschlossen ausgebildet ist.

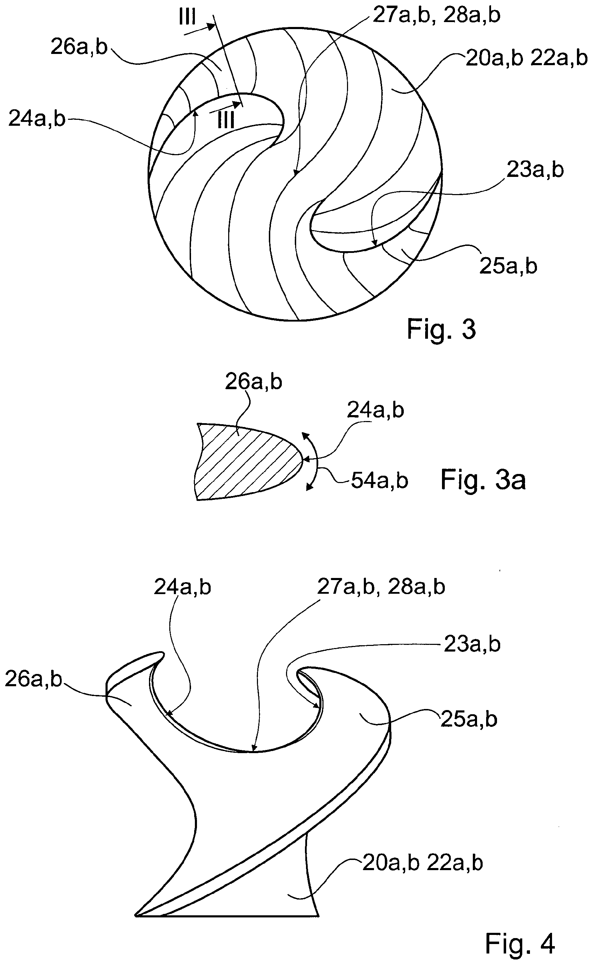

Die als Statorhalteelemente 31a ausgebildeten Strömungseingriffselemente 32a weisen jeweils eine Anlauffläche 33a auf, die dazu vorgesehen ist, eine von dem Laufrad 20a transportiertes Medium aufzuteilen. Das als Laufrad 20a ausgebildete erste Strömungseingriffselement 22a weist zwei Anlaufflächen 23a, 24a auf, die jeweils teilweise von vorauseilenden Flächen von Laufradschaufeln 25a, 26a des Laufrads 20a gebildet sind. Die Anlaufflächen 23a, 24a, 33a weisen bezüglich einer jeweiligen Spaltrichtung konvexe Wölbungen 53, 54 auf (Figur 2, Figur 3a). Die Anlaufflächen 23a, 24a, 33a erstrecken sich schräg bezüglich einer Haupttransportrichtung 40a. Die Haupttransportrichtung 40a entspricht einer Rotationsachse des Laufrads 20a und ist von einer an dem Laufrad 20a ausgebildeten Eintrittsöffnung zu einer von der Statorhülle 36a ausgebildeten Austrittsöffnung hin gerichtet. Ein Durchmesser der Statorhülle 36a weitet sich im Bereich des Statorkerns 34a, hinter dem Laufrad 20a, um einen gleichmäßigen Durchfluss zu erreichen. Die Statorhülle 36a verjüngt sich auf vom Laufrad abgewandter Seite des Statorkerns.

Die Laufradschaufeln 25a, 26a des als Laufrad 20a ausgebildeten Strömungseingriffselements 22a sind sichelförmig ausgebildet (Figur 3 und Figur 4). Die gewölbten Anlaufflächen 23a, 24a der Laufradschaufeln 25a, 26a gehen ineinander über. Ein Übergangsbereich der Anlaufflächen 23a, 24a der Laufradschaufeln 25a, 26a bildet eine weitere Anlauffläche 27a, die in Projektion senkrecht zur Rotationsache ein Zentrum 28a des Laufrads 20a überdeckt. Die weitere Anlauffläche 27a ist sattelförmig ausgebildet. Die Anlaufflächen 23a, 24a erstrecken sich von dem Zentrum 28a des Laufrads 20a ausgehend schräg der Haupttransportrichtung 40a entgegen.

Die als Statorhalteelemente 31a ausgebildeten Strömungseingriffselemente 32a weisen jeweils einen Hohlraum 37a auf, der dazu vorgesehen ist, Kabel zur Versorgung, Steuerung und/oder Messdatenerfassung von einem außerhalb der Statorhülle 36a angeordneten Raum zu der in dem Statorkern 34a angeordneten Antriebseinheit 35a zu führen und/oder um bei hoher Stabilität und/oder hohem Krümmungsradius Material zu sparen. Weiterhin kann dadurch an den unterschiedlichen Seiten des Statorkerns ein gleicher Strom erreicht werden (Figur 2).

In einer alternativen Ausgestaltung ist es denkbar, dass, insbesondere um verbesserte Strömungseigenschaften zu erreichen, lediglich eines der Statorhalteelemente 31a einen Hohlraum 37a aufweist, um die Versorgungskabel zu führen, während die anderen Statorhalteelemente eine schlankere Form aufweisen und auf einen Hohlraum verzichtet wird (Figur 2a).

Weiterhin ist es denkbar, dass durch den Hohlraum ein alternatives Mittel, insbesondere eine Antriebswelle, zum Antrieb des Laufrads geführt ist, wodurch auf eine Anordnung eines Motors im Statorkern verzichtet werden kann und insbesondere eine schlankere Ausgestaltung erreichbar ist.

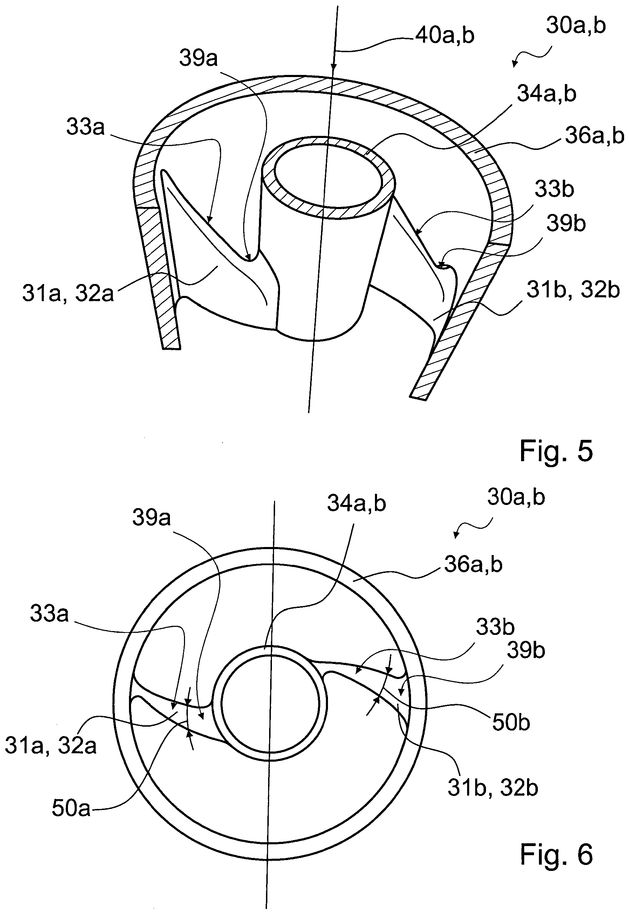

Das als Statorhalteelement 31a ausgebildete Strömungseingriffselement 32a ist teilweise spiralförmig ausgebildet, wobei eine Windungsrichtung einer Richtung entspricht, in der sich von dem Laufrad 20a gefördertes Medium bei nichtvorhandensein des Strömungseingriffselements 32a um den Statorkern 34a winden würde (Figuren 5 und 6). Die Anlauffläche 33a des jeweiligen als Statorhalteelement 31a ausgebildeten Strömungseingriffselements 32 bildet nahe dem Statorkern eine sattelförmige Ausgestaltung 39a aus, wobei der Verlauf der Anlauffläche 33a eine gegenüber der Haupttransportrichtung 40a konkave Wölbung aufweist. Das Statorhalteelement 31a weist von außen nach innen einen größer werdenden Krümmungsradius der Anlauffläche 33a auf. In einer Projektion auf eine Ebene senkrecht zur Haupttransportrichtung 40a bilden Ränder der Anlaufflächen 33a einen Öffnungswinkel 50a von 10°.

Die Wölbungen der Anlaufflächen 23a, 24a, 33a weisen über einen Großteil des Verlaufs der jeweiligen Anlauffläche 23a, 24a, 33a in Haupttransportrichtung 40a einen größer werdenden Krümmungsradius auf. Nahe der Statorhülle 36a und des Statorkerns 34a weisen die Statorhalteelemente 31a eine Verbreiterung, insbesondere durch eine ausgedehnte Schweißnaht oder vorzugsweise durch einen ausgedehnten Gussradius, auf, die zu einer guten Verbindung mit dem jeweiligen Statorelement und, insbesondere aufgrund eines großen Krümmungsradius, insbesondere größer als 5 mm, vorteilhaft größer als 1 cm, zu einer sanfteren Strömungsführung führt.

Ein Abstand 42a zwischen dem Laufrad 20a und dem Statorhalteelement 31a beträgt 50 % eines Durchmessers 44a des Laufrads 20a.

In den Figuren sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den weiteren Ausführungsbeispielen ist der Buchstabe a durch die Buchstaben b bis m ersetzt.

Figuren 1, 3, 4 zeigen in einer rechten Hälfte eine Ausgestaltung mit als Statorhalteelementen 31b ausgebildeten Strömungseingriffselementen 32b, wobei diese eine Anlauffläche 33b aufweisen, die von innen nach außen einen größer werdenden Krümmungsradius quer zum Verlauf der Anlauffläche aufweist. Eine sattelförmige Ausgestaltung 39b weist die Anlauffläche 33b in einem Nahbereich einer Statorhülle 36b auf. Die Statorhülle 36b, 36b' ist zweiteilig ausgebildet, wobei ein zweites Teil der Statorhülle 36b' dazu vorgesehen ist, das Laufrad 20b zu umhüllen. Die zweiteilige Ausgestaltung verbessert Wartungs- und Montageeigenschaften. Weiterhin weist ein laufradabgewandtes Ende der Statorhülle 36b ein zylindrisches, unverjüngtes Ende gegenüber dem Bereich des Statorkerns 34b auf.

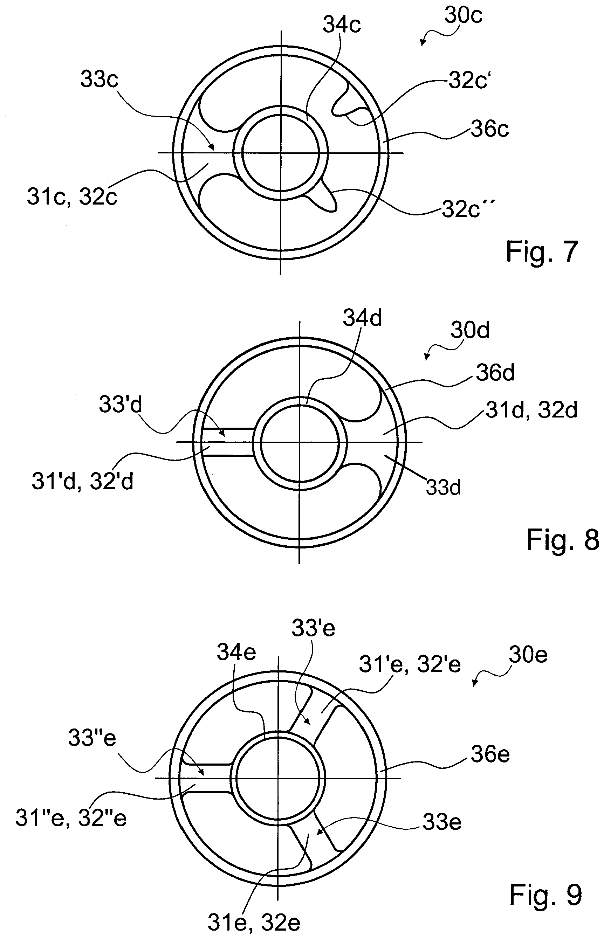

Figur 7 zeigt eine Statoreinheit 30c einer erfindungsgemäßen Pumpenvorrichtung die genau ein Statorhalteelement 31c aufweist, das einen Statorkern 34c mit einer Statorhülle 36c verbindet. Das Statorhalteelement 31c bildet ein Strömungseingriffselement 32c mit einer gewölbten Anlauffläche 33c, deren Radius größer ist als 50 % eines Abstands zwischen dem Statorkern 34c und der Statorhülle 36c.

In einer alternativen Ausgestaltung mit einem einzelnen Statorhalteelement ist es weiterhin denkbar, dass das Statorhalteelement eine Anlauffläche ausbildet, die zumindest im Wesentlichen senkrecht zu einer Haupttransportrichtung verläuft und deren Verlauf lediglich an Verbindungspunkten mit Rotorkern und/oder Rotorhülle eine Wölbung aufweist, die der Haupttransportrichtung entgegen gerichtet ist. Insbesondere ist in einer derartigen Ausgestaltung das Statorhalteelement von der Anlauffläche ausgehend tragflächenartig fortgeführt.

In weiteren Ausgestaltungen ist es denkbar, dass das Statorhalteelement durch Hilfsbrücken unterstützt wird, wobei das Statorhalteelement wesentlich zur Aufnahme eines Gewichts des Statorkerns vorgesehen ist und die Hilfsbrücke im Wesentlichen einer Drehmomentaufnahme bei einem Anfahren und Betreiben des Laufrads vorgesehen ist.

Weiterhin ist es denkbar, dass eine erfindungsgemäße Ausgestaltung, insbesondere bei Vorhandensein lediglich eines einzelnen als Statorhalteelement 31c ausgebildeten Strömungseingriffselement 32c und/oder insbesondere zur verbesserten Umlenkung und/oder Führung des zu transportierenden Mediums, zumindest ein weiteres Strömungseingriffselement 32c', 32c",aufweist, das von der Statorhülle 36c oder von dem Statorkern 34c ausgehend in den Zwischenraum zwischen Statorhülle 36c und Statorkern 34c hineinragt, wobei bezüglich der gegenüberliegenden Statorhülle 36c bzw. des gegenüberliegenden Statorkerns 34c eine Lücke belassen wird, die insbesondere ausreichend groß ist um die im zu transportierenden Medium enthaltene Früchte oder Tiere, insbesondere Fische, passieren zu lassen.

Figur 8 zeigt eine Statoreinheit 30d mit zwei unterschiedlich ausgestalteten Statorhalteelementen 31d, 31'd. Die Statorhalteelemente 31d, 31'd weisen Anlaufflächen 33d, 33'd mit unterschiedlich starken Krümmungsradien auf. Krümmungsradien eines ersten der Statorhalteelemente 31d sind im Wesentlichen doppelt so groß wie Krümmungsradien eines zweiten der Statorhalteelemente 31'd. Die Statorhalteelemente 31d, 31'd sind jeweils im Wesentlichen symmetrisch zu einer radialen Richtung ausgebildet. Lediglich das erste Statorhalteelement 31d weist hierbei einen Hohlraum zur Führung von Kabeln auf.

Figur 9 zeigt eine Statoreinheit 30e mit drei gleichartig ausgebildeten Statorhalteelementen 31e, 31'e, 31"e. Die Statorhalteelemente 31e, 31'e, 31"e sind in einem Winkel von 120° zueinander angeordnet. Anlaufflächen 33e, 33'e, 33"e der Statorhalteelemente 31e, 31'e, 31"e weisen von innen nach außen einen zumindest im Wesentlichen konstanten Krümmungsradius auf. Insbesondere ist es in einer derartigen Ausgestaltung denkbar, dass ein Verlauf der Anlauffläche 33e, 33'e, 33"e zumindest im Wesentlichen senkrecht zur Haupttransportrichtung ausgerichtet ist.

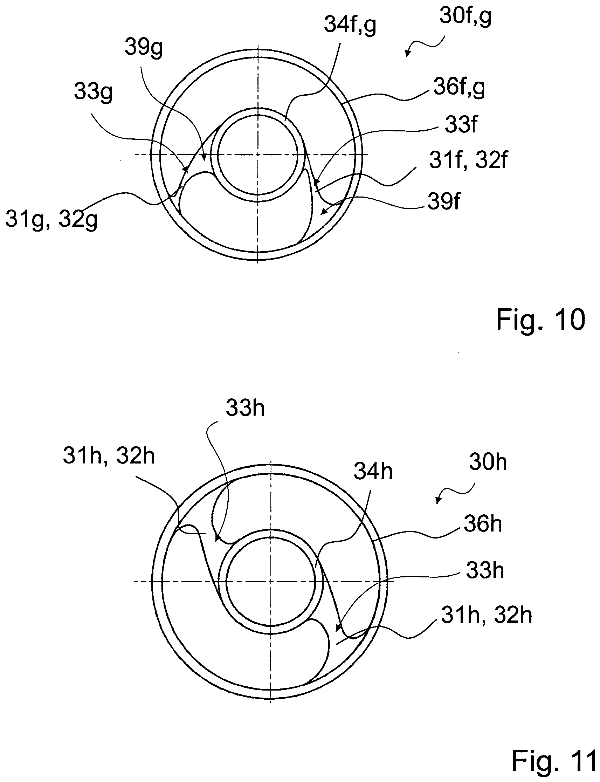

Figur 10 zeigt in einer linken und einer rechten Hälfte Ausgestaltungen vergleichbar zu den Ausgestaltungen in Figur 1 und 6. Figur 10 zeigt Statoreinheiten 30f, 30g, die jeweils Statorhalteelemente 31f, 31g aufweisen, wobei die Statorhalteelemente 31f, 31g in Projektion senkrecht zu einer Haupttransportrichtung im Wesentlichen tangential in Statorkern 34f, 34g, und Statorhülle 36f, 36g übergehen.

Figur 11 zeigt eine Statoreinheit 30h in einer Ausgestaltung vergleichbar zu Figur 10, wobei die Statoreinheit 30h Statorhalteelemente 31h aufweist, die bezüglich einer Projektion in Richtung einer Haupttransportrichtung, in Übergangsbereichen von dem Statorhalteelement 31h zur Statorhülle 36h bzw. zum Statorkern 34h Krümmungsradien aufweist, die größer sind als 20 % eines Abstands zwischen Statorkern 34h und Statorhülle 36h.

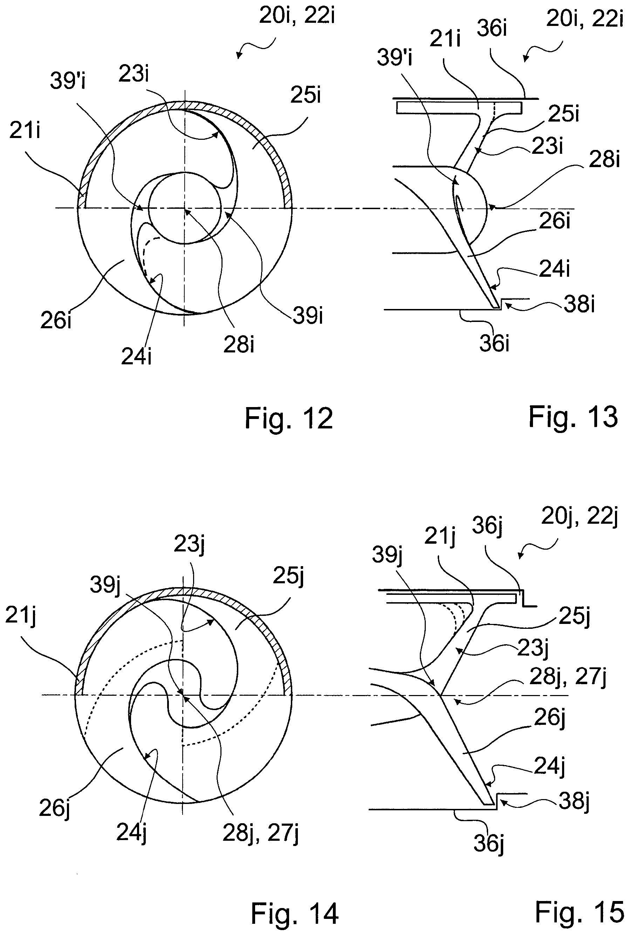

Figuren 12 und 13 zeigen ein Laufrad 20i in geschlossener (obere Hälfte) und offener (untere Hälfte) Ausführung, das in ihrem Zentrum 28i eine im Wesentlichen kugelförmige Wölbung entgegen der Hauptrichtung aufweist. Das Laufrad 20i weist zwei Laufradschaufeln 25i, 26i auf, die jeweils eine Anlauffläche 23i, 24i ausbilden. Die Anlaufflächen 23i, 24i weisen von außen nach innen einen größer werdenden Krümmungsradius auf. An einem inneren Ende der Anlaufflächen 23i, 24i gehen diese tangential in die zentrale Wölbung über und weisen in dem Übergangbereich jeweils eine sattelförmige Ausgestaltung 39i, 39'i auf. In geschlossener Ausführung weist das Laufrad 20i einen Laufradmantel 21i auf, der fest mit dem Laufrad 20i verbunden ist und der wiederum in einem Hüllelement, hier einer Statorhülle 36i, geführt ist. Der Laufradmantel 21i kann hierbei über eine Spitze der Laufradschaufeln 25i, 26i hinausragen (durchgezogene Linie) oder bündig mit dieser abschließen (gestrichelte Linie). In offener Ausführung weist ein statisches Hüllelement des Laufrads 20i, hier die Statorhülle 36i, eine Schulter 38i auf, hinter der Enden der Laufradschaufeln 25i, 26i des Laufrads 20i geführt und/oder geschützt sind, um zu transportierendes Medium vor Beschädigung durch die Laufradschaufeln 25i, 26i zu schützen.

Figuren 14 und 15 zeigen eine erfindungsgemäßes Laufrad 20j in geschlossener (obere Hälfte) und offener (untere Hälfte) Ausführung, das vergleichbar zum Ausführungsbeispiel nach Figuren 1, 3 und 4 ausgebildet ist, wobei Anlaufflächen 23j, 24j von zwei Laufradschaufeln 25j, 26j des Laufrads 20j im Zentrum 28j des Laufrads 20j ineinander übergehen und im Zentrum 28j eine sattelförmige Ausgestaltung 39j bilden. Im Unterschied erstrecken sich ein voller Durchmesser der Laufradschaufeln 25j, 26j lediglich über einen Winkel von etwa 90° um das Zentrum 28j, so dass ein Quetschen von zu transportierendem Medium zwischen unterschiedlichen Laufradschaufeln 25j, 26j vermieden wird. Weiterhin erstrecken sich die Laufradschaufeln 25j, 26j jeweils über ca. 180° bezüglich des Zentrums 28j.

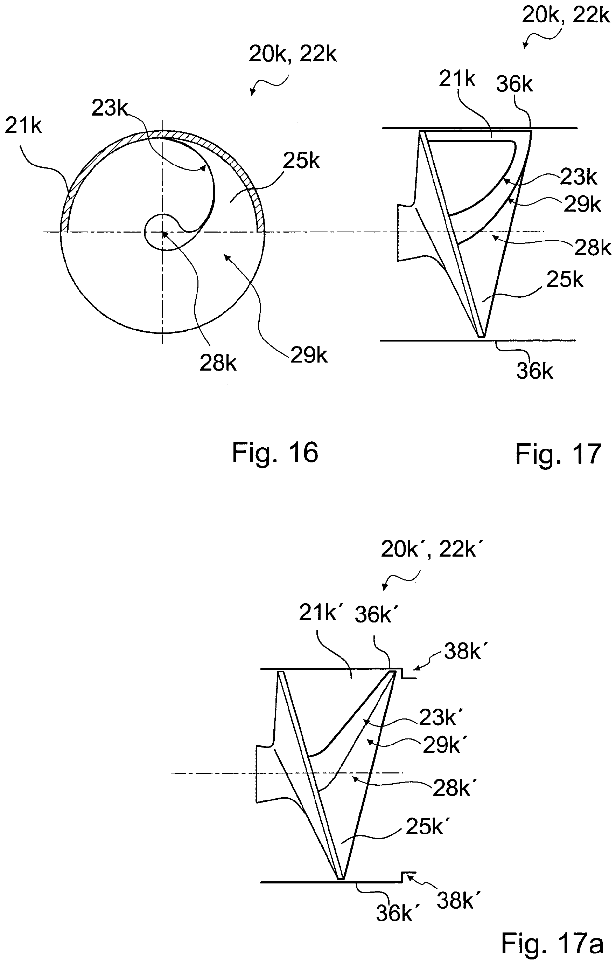

Figuren 16, 17 und 17a zeigen ein erfindungsgemäßes Laufrad 20k, 20k' in geschlossener (obere Hälfte Figur 16 und Figur 17) und offener (untere Hälfte Figur 16 und Figur 17a) Ausführung, die lediglich eine einzelne Laufradschaufel 25k aufweist. Wie die Laufradschaufeln der vorhergehenden Beispiele ist auch die Laufradschaufel 25k am Eintritt sichelförmig ausgebildet. Wie in den vorhergehenden Beispielen endet eine Anlauffläche 23k der Laufradschaufel 25k außerhalb eines Zentrums 28k des Laufrads 20k. Wie in den vorhergehenden Beispielen nimmt ein Krümmungsradius der Anlauffläche 23k zum Zentrum 28k hin zu. Die Laufradschaufel 25k weist eine Hauptfläche 29k auf, die einer Haupttransportrichtung 40k entgegen gerichtet ist und die bezüglich der Haupttransportrichtung 40k eine Neigung aufweist, die von außen nach innen größer wird. Aufgrund der sehr geringen Neigung der Hauptfläche 29k und der geschlossenen Ausgestaltung wird hierbei auf eine Ausgestaltung einer Schulter an der Statorhülle 36k verzichtet.

In der offenen Variante nach Figur 17a, bei der eine Hauptfläche 29k' der einzelnen Laufradschaufel 25k' im Wesentlichen eine konstante Neigung aufweist, wird eine Ausgestaltung mit Schulter 38k' bevorzugt.

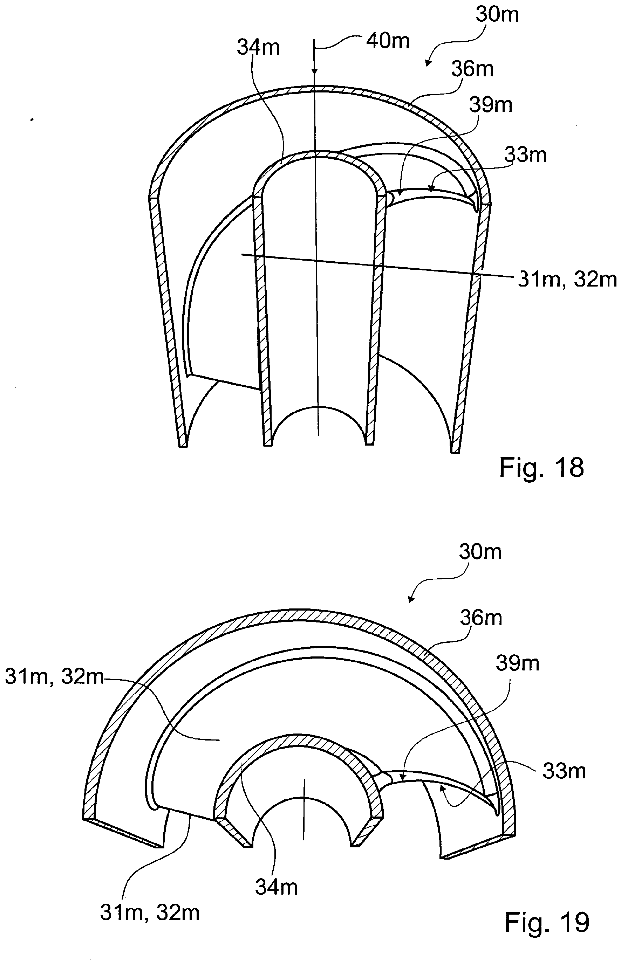

Figuren 18 und 19 zeigen eine Statoreinheit 30m mit einem Statorkern 34m, einer Statorhülle 36m und einem den Statorkern 34m mit der Statorhülle 36m verbindenden, als Statorhalteelement 31m ausgebildetes Strömungseingriffselement 32m. Das Strömungseingriffselement 32m weist eine wendelförmige Ausgestaltung auf, die sich um den Statorkern 34m windet. Das Strömungseingriffselement 32m erstreckt sich über einen Winkel von ca. 180° um den Statorkern 34m. Das Strömungseingriffselement 32m erstreckt sich über eine Distanz entlang einer Haupttransportrichtung 40m, die etwa einem Durchmesser der Statorhülle 36m entspricht. Ein Neigungswinkel der Wendelung bezüglich der Haupttransportrichtung 40m verändert sich hierbei entlang der Haupttransportrichtung 40m kontinuierlich von ca. 75° auf etwa 0°. Eine Anlauffläche 33m des Strömungseingriffselements 32m weist eine Wölbung auf, die im Wesentlichen einen von außen, an der Statorhülle 36m, nach innen, am Statorkern 34m, größer werdenden Krümmungsradius aufweist. Die Anlauffläche 33m bildet an einem bezüglich einer lokalen Strömung hintersten Punkt eine sattelförmige Ausgestaltung 39m aus. Die sattelförmige Ausgestaltung 39m ist in einem Bereich eines Endes der Anlauffläche 33m ausgebildet, an dem der Krümmungsradius maximal wird.

Weiterhin soll angemerkt werden, dass beliebige Kombinationen der unterschiedlichen Laufräder und der unterschiedlichen Statorhalteelemente als erfindungsgemäße Ausgestaltungen betrachtet werden.

### Bezugszeichen

- 10: Pumpe
- 12: Pumpenvorrichtung
- 20: Laufrad
- 21: Laufradmantel
- 22: Strömungseingriffselement
- 23: Anlauffläche
- 24: Anlauffläche
- 25: Laufradschaufel
- 26: Laufradschaufel
- 27: Anlauffläche
- 28: Zentrum
- 29: Hauptfläche
- 30: Statoreinheit
- 31: Statorhalteelement
- 32: Strömungseingriffselement
- 33: Anlauffläche
- 34: Statorkern
- 35: Antriebseinheit
- 36: Statorhülle
- 37: Hohlraum
- 38: Schulter
- 39: sattelförmige Ausgestaltung
- 40: Haupttransportrichtung
- 42: Abstand
- 44: Durchmesser
- 50: Öffnungswinkel
- 53: Wölbung
- 54: Wölbung

## Patentansprüche

1. Axialpumpenvorrichtung (12) mit einem Laufrad (20) und mit zumindest einem Strömungseingriffselement (32), das zumindest eine Anlauffläche (33) aufweist, die dazu vorgesehen ist, ein zu transportierendes Medium aufzuteilen, wobei das Strömungseingriffselement (32) als Statorhalteelement (31) ausgebildet ist, das dazu vorgesehen ist, einen das Laufrad (20) tragenden Statorkern (34) mit einer das zu transportierende Medium innenseitig führenden Statorhülle (36) tragend zu verbinden, wobei die Anlauffläche (33) zumindest bezüglich einer Spaltrichtung eine konvexe Wölbung aufweist, **dadurch gekennzeichnet, dass** ein Abstand (42) zwischen dem Laufrad (20) und dem Statorhalteelement (31) zumindest 25 % eines Durchmessers (44) des Laufrads (20) entspricht.

2. Axialpumpenvorrichtung (12) nach Anspruch 1, **dadurch gekennzeichnet, dass** sich die Anlauffläche (33) schräg bezüglich einer Haupttransportrichtung (40) erstreckt.

3. Axialpumpenvorrichtung (12) nach einem der vorhergehenden Ansprüche,
**dadurch gekennzeichnet, dass** das Laufrad (20) zumindest eine sichelförmige Laufradschaufel (25, 26) aufweist.

4. Axialpumpenvorrichtung (12) nach einem der vorhergehenden Ansprüche,
**dadurch gekennzeichnet, dass** das Laufrad (20) zumindest zwei Laufradschaufeln (25, 26) aufweist, deren gewölbte Anlaufflächen (23, 24) bildende vorauseilende Flächen ineinander übergehen.

5. Axialpumpenvorrichtung (12) nach einem der vorhergehenden Ansprüche,
**dadurch gekennzeichnet, dass** das als Statorhalteelement (31) ausgebildete Strömungseingriffselement (32) zumindest einen Hohlraum (37) aufweist, der dazu vorgesehen ist, zumindest ein Kabel von einem außerhalb der Statorhülle (36) angeordneten Raum zu einer in dem Statorkern (34) angeordneten Antriebseinheit (35) zu führen.

6. Axialpumpenvorrichtung (12) nach einem der vorhergehenden Ansprüche,
**dadurch gekennzeichnet, dass** das als Statorhalteelement (31) ausgebildete Strömungseingriffselement (32) zumindest teilweise spiralförmig ausgebildet ist, wobei eine Windungsrichtung einer Richtung entspricht, in der sich von dem Laufrad (20) gefördertes Medium bei nichtvorhandensein des Strömungseingriffselements (32) um den Statorkern (34) winden würde.

7. Axialpumpenvorrichtung (12) nach einem der vorhergehenden Ansprüche,
**dadurch gekennzeichnet, dass** genau ein Statorhalteelement (31) vorhanden ist.

8. Axialpumpenvorrichtung (12) nach einem der vorhergehenden Ansprüche,
**dadurch gekennzeichnet, dass** die Wölbung der Anlauffläche (33) zumindest über einen Großteil des Verlaufs der Anlauffläche (33) in Haupttransportrichtung (40) einen größer werdenden Krümmungsradius aufweist.

9. Axialpumpenvorrichtung (12) nach einem der vorhergehenden Ansprüche,
**dadurch gekennzeichnet, dass** die Anlauffläche (33) eine sattelförmige Ausgestaltung (39) aufweist.

10. Axialpumpenvorrichtung (12) nach einem der vorhergehenden Ansprüche, **dadurch gekennzeichnet, dass** der Abstand (42) zumindest 40% des Durchmessers (44) des Laufrads (20) entspricht.

11. Axialpumpenvorrichtung (12) nach einem der vorhergehenden Ansprüche, **dadurch gekennzeichnet, dass** das Laufrad (20) zumindest eine Laufradschaufel (25, 26) aufweist, deren einer Haupttransportrichtung (40) entgegen gerichtete Hauptfläche (29) bezüglich der Haupttransportrichtung (40) eine Neigung aufweist, die von außen nach innen größer wird.

12. Pumpe (10) mit einer Axialpumpenvorrichtung (12) nach einem der vorhergehenden Ansprüche.

## Claims

1. Axial pump device (12) with an impeller (20) and with at least one flow-engagement element (32) having at least one contact surface (33), which is configured for dividing up a medium that is to be transported;
the flow-engagement element (32) being embodied as a stator holding element (31) which is configured to connect a stator core (34), which carries the impeller (20), to a stator sleeve (36), which guides the medium that is to be transported inside, via a loadbearing connection,
wherein the contact surface (33) has a convex curvature at least with respect to a gap direction,
**characterised in that** a distance (42) between the impeller (20) and the stator holding element (31) is equivalent to at least 25 % of a diameter (44) of the impeller (20).

2. Axial pump device (12) according to claim 1,
**characterised in that** the contact surface (33) extends obliquely relative to a main transport direction (40).

3. Axial pump device (12) according to one of the preceding claims,
**characterised in that** the impeller (20) comprises at least one sickle-shaped impeller blade (25, 26).

4. Axial pump device (12) according to one of the preceding claims,
**characterised in that** the impeller (20) comprises at least two impeller blades (25, 26) whose leading surfaces, forming curved thrust surfaces (23, 24), merge into each other.

5. Axial pump device (12) according to one of the preceding claims,
**characterised in that** the flow-engagement element (32), which is embodied as a stator holding element (31), comprises at least one hollow space (37), which is configured to guide at least one cable from a space arranged outside the stator sleeve (36) to a drive unit (35) that is arranged in the stator core (34).

6. Axial pump device (12) according to one of the preceding claims,
**characterised in that** the flow-engagement element (32), which is embodied as a stator holding element (31), is implemented at least partly in a spiral shape, wherein a winding direction corresponds to a direction in which a medium conveyed by the impeller (20) would wind around the stator core (34) if there was no flow-engagement element (32) present.

7. Axial pump device (12) according to one of the preceding claims,
**characterised in that** there is precisely one stator holding element (31).

8. Axial pump device (12) according to one of the preceding claims,
**characterised in that** the curvature of the contact surface (33) has an increasing curvature radius at least over a large portion of the contour of the contact surface (33) in a main transport direction (40).

9. Axial pump device (12) according to one of the preceding claims,
**characterised in that** the contact surface (33) presents a saddle-shaped implementation.

10. Axial pump device (12) according to one of the preceding claims,
**characterised in that** the distance (42) corresponds to at least 40 % of the diameter (44) of the impeller (20).

11. Axial pump device (12) according to one of the preceding claims,
**characterised in that** the impeller (20) comprises at least one impeller blade (25, 26) whose main surface (29), which is oriented counter to a main transport direction (40), has an inclination relative to the main transport direction (40) that increases from an outside inwards.

12. Pump (10) with an axial pump device (12) according to one of the preceding claims.

## Revendications

1. Dispositif de pompe axiale (12) avec un rotor (20) et avec au moins un élément d'engrenage-écoulement (32) comprenant au moins une surface de contact (33) qui est prévue à diviser un milieu qui est à transporter,
l'élément d'engrenage-écoulement (32) étant réalisé comme élément rétenteur de stator (31) qui est configuré pour raccorder un noyau de stator (34) supportant le rotor (20) à un manchon de stator (36) qui conduit le milieu à transporter à l'intérieur,
la surface de contact (33) ayant une voûte convexe au moins par rapport à une direction de fente,
**caractérisé en ce qu'**une distance (42) entre le rotor (20) et l'élément rétenteur de stator (31) corresponde à au moins 25 % d'un diamètre (44) du rotor (20).

2. Dispositif de pompe axiale (12) selon la revendication 1,
**caractérisé en ce que** la surface de contact (33) s'étend obliquement par rapport à une direction principale de transport (40).

3. Dispositif de pompe axiale (12) selon l'une des revendications précédentes, **caractérisé en ce que** le rotor (20) comporte au moins une aube de rotor (25, 26) en forme de faucille.

4. Dispositif de pompe axiale (12) selon l'une des revendications précédentes, **caractérisé en ce que** le rotor (20) comprend au moins deux aubes de rotor (25, 26), les surfaces devançantes desquelles, qui forment des surfaces de contact (23, 24) voûtées, mergent l'une dans l'autre.

5. Dispositif de pompe axiale (12) selon l'une des revendications précédentes, **caractérisé en ce que** l'élément d'engrenage-écoulement (32) réalisé comme élément rétenteur de stator (31) comprend au moins un espace creux (37), qui est prévu à conduire au moins un câble d'un espace disposé à dehors du manchon de stator (36) à une unité d'entraînement (35) disposée dans le noyau de stator (34).

6. Dispositif de pompe axiale (12) selon l'une des revendications précédentes, **caractérisé en ce que** l'élément d'engrenage-écoulement (32) réalisé comme élément rétenteur de stator (31) est réalisé au moins partiellement en forme de spirale, une direction de spire correspondant à une direction dans laquelle un milieu transporté par le rotor (20) sinuerait autour du noyau de stator (34) si l'élément d'engrenage-écoulement (32) n'était pas là.

7. Dispositif de pompe axiale (12) selon l'une des revendications précédentes, **caractérisé en ce qu'**il y a précisément un élément rétenteur de stator (31).

8. Dispositif de pompe axiale (12) selon l'une des revendications précédentes, **caractérisé en ce que** la voûte de la surface de contact (33) présente un radius de courbature qui croisse au moins à travers une grande partie du cours de la surface de contact (33) dans une direction principale de transport (40).

9. Dispositif de pompe axiale (12) selon l'une des revendications précédentes, **caractérisé en ce que** la surface de contact (33) présente une implémentation en forme de selle.

10. Dispositif de pompe axiale (12) selon l'une des revendications précédentes, **caractérisé en ce que** la distance (42) corresponde à au moins 40 % du diamètre (44) du rotor (20).

11. Dispositif de pompe axiale (12) selon l'une des revendications précédentes, **caractérisé en ce que** le rotor (20) comporte au moins une aube de rotor (25, 26), une surface principale (29) de ladite aube de rotor (25, 26), qui est orientée contre une direction principale de transport (40), ayant une inclinaison qui croît de l'extérieur vers l'intérieur.

12. Pompe (10) avec un dispositif de pompe axiale (12) selon l'une des revendications précédentes.
